(19) Europäisches Patentamt / European Patent Office / Office européen des brevets

(11) EP 2 963 611 B1

(12) FASCICULE DE BREVET EUROPEEN

(45) Date de publication et mention
de la délivrance du brevet:
**03.01.2018 Bulletin 2018/01**

(51) Int Cl.:
*G06Q 50/06* (2012.01)      *H02J 3/04* (2006.01)
*H02J 3/12* (2006.01)

(21) Numéro de dépôt: **15173462.1**

(22) Date de dépôt: **23.06.2015**

(54) **PROCÉDÉ DE CONTRÔLE DE LA PUISSANCE ÉLECTRIQUE DÉLIVRÉE SUR UN RÉSEAU ÉLECTRIQUE PAR AU MOINS DEUX SOURCES D'ÉNERGIE ÉLECTRIQUE ET SYSTÈME ÉLECTRIQUE ASSOCIÉ**

KONTROLLVERFAHREN DER ELEKTRISCHEN LEISTUNG, DIE VON MINDESTENS ZWEI STROMQUELLEN IN EIN STROMNETZ EINGESPEIST WIRD, UND ENTSPRECHENDES ELEKTRISCHES SYSTEM

METHOD FOR CONTROLLING ELECTRIC POWER SUPPLIED TO A POWER GRID BY AT LEAST TWO SOURCES OF ELECTRICAL ENERGY AND ASSOCIATED ELECTRICAL SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.07.2014 FR 1456484**

(43) Date de publication de la demande:
**06.01.2016 Bulletin 2016/01**

(73) Titulaire: **Schneider Electric Industries SAS 92500 Rueil-Malmaison (FR)**

(72) Inventeur: **AULAGNIER, Vincent 38050 Grenoble Cedex 09 (FR)**

(74) Mandataire: **Lavoix 2, place d'Estienne d'Orves 75441 Paris Cedex 09 (FR)**

(56) Documents cités:
**US-A1- 2010 090 532**

• **KHAYYER PARDIS ET AL: "Decentralized Control of Large-Scale Storage-Based Renewable Energy Systems", IEEE TRANSACTIONS ON SMART GRID, IEEE, USA, vol. 5, no. 3, 1 mai 2014 (2014-05-01), pages 1300-1307, XP011545846, ISSN: 1949-3053, DOI: 10.1109/TSG.2014.2311093 [extrait le 2014-04-17]**
• **XIAONAN LU ET AL: "SoC-based dynamic power sharing method with AC-bus voltage restoration for microgrid applications", IECON 2012 - 38TH ANNUAL CONFERENCE ON IEEE INDUSTRIAL ELECTRONICS SOCIETY, IEEE, 25 octobre 2012 (2012-10-25), pages 5677-5682, XP032281389, DOI: 10.1109/IECON.2012.6389058 ISBN: 978-1-4673-2419-9**
• **XIANGJUN LI ET AL: "Battery Energy Storage Station (BESS)-Based Smoothing Control of Photovoltaic (PV) and Wind Power Generation Fluctuations", IEEE TRANSACTIONS ON SUSTAINABLE ENERGY, IEEE, USA, vol. 4, no. 2, 1 avril 2013 (2013-04-01), pages 464-473, XP011497620, ISSN: 1949-3029, DOI: 10.1109/TSTE.2013.2247428**

EP 2 963 611 B1

**Description**

La présente invention concerne un procédé de contrôle de la puissance électrique délivrée sur un réseau électrique par au moins deux sources d'énergie électrique, ainsi qu'un système électrique associé comprenant au moins deux sources d'énergie électrique connectées à un réseau électrique.

Dans le domaine de l'alimentation électrique d'un réseau électrique auquel sont connectées des charges, on connaît un système électrique comprenant un organe principal d'alimentation électrique, propre à alimenter électriquement les charges via le réseau, ainsi que des sources d'énergie électrique, également appelées unités de fourniture d'énergie électrique, connectées au réseau électrique. Dans la suite de la description, on considèrera l'exemple dans lequel les unités de fourniture d'énergie électrique correspondent à des unités de stockage d'énergie électrique connectées au réseau électrique. Toutefois, il est connu que les unités de fourniture d'énergie électrique considérées dans un tel système électrique correspondent plus généralement à des sources de tension connectées au réseau électrique. Ainsi, dans un tel système, les unités de stockage sont propres à alimenter électriquement les charges en cas de défaillance de l'organe principal d'alimentation électrique, et plus précisément en cas d'arrêt de l'alimentation électrique des charges par l'organe principal d'alimentation, celui-ci n'alimentant alors plus les charges et n'assurant plus le maintien d'une fréquence et d'une tension stables sur le réseau.

Plus précisément, les unités de stockage d'énergie électrique comprennent chacune un organe de stockage d'énergie électrique et un module de contrôle de l'organe de stockage. Les unités de stockage sont propres à fonctionner comme des sources de tension lorsque l'organe principal d'alimentation électrique est défaillant. Les unités de stockages sont connectées en parallèle au réseau.

Un problème connu dans un tel système électrique, est d'assurer la répartition, entre les unités de stockage, c'est-à-dire plus généralement entre les unités de fourniture d'énergie électrique, de la puissance électrique à délivrer aux charges. En effet, l'objectif est que la puissance électrique requise par les charges soit équitablement délivrée par les unités de stockage, en fonction de leur puissance nominale.

Un deuxième problème rencontré dans un tel système est de réaliser la répartition de la puissance électrique délivrée sans utiliser un système de supervision de toutes les unités de stockage, c'est-à-dire en disposant d'unités de stockage indépendantes.

Il est ainsi connu du document « Control of Distributed Uninterruptible Power Supply Systems» de Josep M. Guerrero, L. H. publié en août 2008 dans la revue, Transactions on industrial electronics*, d'utiliser une méthode appelée contrôle de statisme, afin de répartir la puissance électrique à délivrer aux charges entre des unités de fourniture d'énergie électrique, correspondant par exemple à des unités de stockages, qui sont indépendantes les unes des autres. Suivant cette méthode, chaque unité de stockage est propre à délivrer un signal de tension sur le réseau avec une fréquence et une amplitude qui s'adapte, en fonction des puissances active et réactive mesurées en sortie de l'unité de stockage. Plus précisément, au moment de l'arrêt de l'alimentation électrique des charges par l'organe principal d'alimentation électrique suite à une défaillance, le module de contrôle de chaque unité de stockage est configuré pour délivrer sur le réseau un signal de tension avec une fréquence F' et une amplitude A' maximales, qui correspondent à une tension et une amplitude à délivrer sur le réseau lorsqu'aucune charge n'est connectée au réseau. Puis, chaque module de contrôle mesure les puissances électriques active et réactive délivrées au réseau, en sortie de l'unité de stockage correspondante, et fait varier la valeur de l'amplitude et la valeur de la fréquence du signal de tension suivant les équations suivantes :

$$F = F' - K_w * (P * \sin(\theta) - Q * \cos(\theta)) \qquad (1)$$

$$A = A' - K_A * (P * \sin(\theta) + Q * \cos(\theta)) \qquad (2)$$

où θ est la phase de l'impédance complexe du réseau, celle-ci étant égale à 0° pour un réseau résistif et 90° pour un réseau inductif,
A est l'amplitude du signal de tension, F est la fréquence du signal de tension, P est la puissance active, Q est la puissance réactive, et
$K_w$ et $K_A$ sont des coefficients paramétrables.

Ainsi, dans le cas d'un réseau résistif on obtient les équations suivantes :

$$F = F' + K_w * Q \qquad (3)$$

$$A = A' - K_A * P \qquad (4)$$

Une telle méthode de contrôle permet de compenser, dans un système électrique tel que présenté ci-dessus, le fait que lorsqu'une charge est connectée au réseau, l'unité de stockage, c'est-à-dire plus généralement l'unité de fourniture d'énergie électrique, pour laquelle l'impédance entre elle-même et la charge est la plus faible, va délivrer proportionnellement à sa puissance nominale une part de puissance électrique plus grande sur le réseau que les autres unités de stockage. De plus, il est connu pour chaque unité de stockage que la puissance délivrée sur le réseau électrique par l'unité de stockage augmente avec la fréquence et l'amplitude du signal de tension délivré par l'unité de stockage. Ainsi, dans l'exemple d'un réseau résistif, le fait de faire varier l'amplitude du signal de tension, via l'équation (4) présentée ci-dessus, permet un contrôle rétroactif du signal de tension délivré par chaque unité de stockage et d'assurer la répartition, entre plusieurs unités de stockage, de la puissance électrique à délivrer à des charges connectées au réseau.

Cependant, cette méthode de contrôle de statisme présente certains désavantages en ce qui concerne la durée pendant laquelle les unités de stockage d'énergie électrique alimentent électriquement les charges connectées sur le réseau et la gestion de l'énergie électrique stockée dans les unités de stockage, notamment lorsque les unités de stockage ne stockent pas la même quantité d'énergie électrique.

Le but de l'invention est donc de proposer un procédé de contrôle de la puissance électrique délivrée à un réseau électrique par une pluralité d'unités de stockage, permettant une répartition de la puissance électrique délivrée entre les différentes unités de stockage et permettant d'alimenter électriquement des charges connectées sur le réseau pendant une durée plus longue et avec un déchargement optimisé des unités de stockage d'énergie électrique, afin d'utiliser au maximum l'énergie électrique stockée dans les unités de stockage.

A cet effet, l'invention concerne un procédé de contrôle de la puissance électrique délivrée à un réseau électrique par au moins deux sources d'énergie électrique selon la revendication 1.

Grâce à l'invention, la répartition de la puissance électrique à délivrer sur le réseau par la ou les sources d'énergie est améliorée, via le contrôle et la modification du paramètre du signal de tension en fonction de l'énergie électrique stockée dans l'organe de stockage de chaque source d'énergie. La décharge de chaque source d'énergie et, plus précisément de l'organe de stockage correspondant, est optimisée et la durée pendant laquelle chaque source d'énergie est propre à alimenter le réseau est augmentée. L'énergie électrique stockée dans chaque organe de stockage est ainsi utilisée au maximum.

Selon des aspects avantageux de l'invention, le procédé de contrôle comprend en outre une ou plusieurs des caractéristiques optionnelles des revendications 2 à 8.

L'invention concerne également un système électrique selon la revendication 9.

L'invention sera mieux comprise et d'autres avantages de celle-ci apparaitront à la lumière de la description qui va suivre, donnée uniquement à titre d'exemple non limitatif, et faite en se référant aux dessins annexés, sur lesquels :

- la figure 1 est une représentation schématique d'un système électrique selon un premier mode de réalisation de l'invention, le système comprenant une pluralité de sources d'énergie électrique connectées à un réseau électrique de type résistif;
- la figure 2 est un ensemble de deux courbes représentant chacune la variation d'une valeur de consigne de l'amplitude d'un signal de tension délivré par l'une des sources d'énergie de la figure 1, en fonction d'une puissance électrique mesurée en sortie de ladite source d'énergie ;
- la figure 3 est un organigramme d'un procédé de contrôle de la puissance électrique délivrée au réseau électrique par les sources d'énergie de la figure 1 ;
- la figure 4 est une représentation analogue à celle de la figure 1 selon un deuxième mode de réalisation de l'invention ;
- la figure 5 est un ensemble de deux courbes analogue à celui de la figure 2 selon le deuxième mode de réalisation de l'invention ;
- la figure 6 est un organigramme analogue à celui de la figure 3 selon le deuxième mode de réalisation de l'invention ;
- la figure 7 est un ensemble de deux courbes analogue à celui des figures 2 et 5 selon un troisième mode de réalisation de l'invention ;
- la figure 8 est un ensemble de deux courbes analogue à celui de la figure 2 pour un réseau électrique de type inductif ;
- la figure 9 est un ensemble de deux courbes analogue à celui de la figure 5 pour un réseau électrique de type inductif ; et
- la figure 10 est un ensemble de deux courbes analogue à celui de la figure 7 pour un réseau électrique de type inductif.

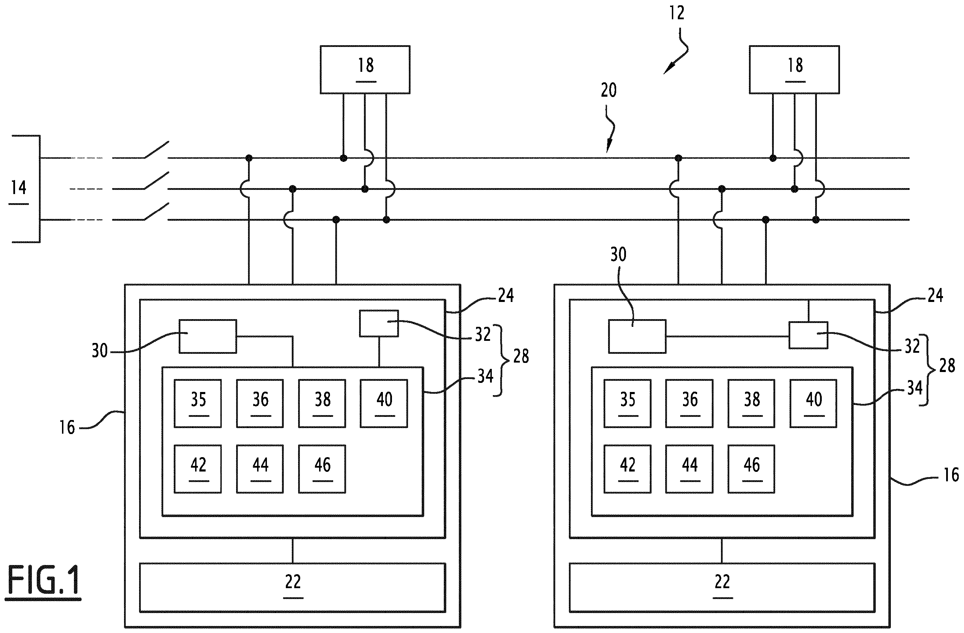

Un système électrique 12 selon un premier mode de réalisation de l'invention est présenté à la figure 1. Le système électrique 12 comprend un organe principal 14 d'alimentation électrique, deux sources d'énergie électrique 16, telles que des unités de stockage 16, et deux charges électriques 18 connectées à un réseau électrique 20.

Sur la figure 1, l'organe principal d'alimentation électrique 14 est déconnecté du réseau électrique 20 et n'alimente plus le réseau électrique 20 et les charges 18.

Les unités de stockage 16 sont connectées au réseau électrique 20 et destinées à alimenter électriquement les charges 18, lorsque l'organe principal d'alimentation électrique 14 est déconnecté du réseau 20.

Les unités de stockage 16 comprennent chacune un organe 22 de stockage d'énergie électrique et un module 24 de contrôle de l'organe de stockage 22. Les unités de stockage 16 sont configurées pour délivrer un signal de tension alternatif local $S1_{ij}$ sur le réseau électrique 20, afin d'alimenter électriquement les charges 18, j étant un indice entier correspondant à un numéro de l'unité de stockage 16 et i étant un indice entier correspondant à un instant temporel donné. Les unités de stockages 16 sont connectées au réseau 20 en parallèle les unes des autres.

Les charges 18 sont destinées à être alimentées via le réseau électrique 20 et à consommer une première puissance électrique P18 lorsqu'elles sont connectées au réseau 20. En d'autres termes, les charges 18 sont propres, lorsqu'elles sont connectées au réseau 20, à requérir la première puissance électrique P18 et les unités de stockage 16 sont destinées à délivrer la puissance électrique requise P18. Dans la suite, on considèrera plus particulièrement la puissance électrique active à délivrer aux charges 18, la puissance électrique active étant positive lorsque le flux de puissance circule des unités de stockage 16 vers les charges 18.

Le réseau électrique 20 est un réseau triphasé destiné à alimenter les charges électriques 18. Le réseau électrique 20 est assimilable à un réseau basse tension. Dans la suite, on considère que le réseau électrique 20 est de type résistif.

En variante, le réseau électrique 20 est un réseau monophasé.

Les charges électriques 18 et le réseau électrique 20 sont configurés pour fonctionner avec des grandeurs électriques minimales de fonctionnement, c'est-à-dire avec un signal de tension alternatif global S2, dont des paramètres sont supérieurs à des paramètres limites de fonctionnement. A titre d'exemple, les charges électriques 18 et le réseau électrique 20 sont configurés pour fonctionner avec le signal de tension alternatif global S2, dont l'amplitude est supérieure à une amplitude minimale de fonctionnement $A_{min}$ et dont la fréquence est supérieure à une fréquence minimale de fonctionnement $F_{min}$ et inférieure à une fréquence maximale de fonctionnement $F_{max}$.

Le signal de tension alternatif global S2 correspond à la tension vue sur le réseau 20 et résultant de l'alimentation du réseau par chaque unité de stockage 16, via le signal de tension alternatif local $S1_{ij}$.

Chaque organe de stockage d'énergie 22 est propre à emmagasiner, c'est-à-dire à stocker, une énergie électrique maximale $ESM_j$, dite énergie maximale stockable $ESM_j$, également appelée capacité maximale. Cette énergie maximale stockable est par exemple exprimée en Watt-heure (Wh).

Chaque module de contrôle 24 est adapté pour délivrer une puissance électrique maximale, par exemple une puissance électrique active maximale $Pn_j$. Chaque module de contrôle 24 est adapté pour commander l'application du signal de tension alternatif local $S1_{ij}$ au réseau électrique 20, pour l'alimentation électrique du réseau et des charges 18.

Chaque module de contrôle 24 est propre à délivrer le signal de tension local $S1_{ij}$, avec une amplitude supérieure à l'amplitude minimale de fonctionnement $A_{min}$ et une fréquence supérieure à la fréquence minimale de fonctionnement $F_{min}$ et inférieure à la fréquence maximale de fonctionnent $F_{max}$.

Plus précisément, chaque module de contrôle 24 est un convertisseur de tension continu-alternatif et comprend une unité de traitement 28, ainsi qu'une unité 30 d'application du signal de tension local $S1_{ij}$ au réseau électrique 20. Par la suite, un seul module de contrôle 24 sera décrit, la description s'appliquant à tous les modules de contrôle 24. L'application du signal de tension local $S1_{ij}$ correspond à la génération du signal de tension local $S1_{ij}$, c'est-à-dire à la délivrance sur le réseau 20 du signal de tension local $S1_{ij}$.

Les modules de contrôle 24 sont indépendants les uns des autres, c'est-à-dire qu'ils ne sont pas reliés à un système de supervision de toutes les unités de stockage, qui serait propre à commander chaque unité de stockage 16 en fonction de données transmises par d'autres unités de stockage 16 et/ou de mesures réalisées à proximité d'autres unités de stockage 16.

L'unité de traitement 28 comprend un processeur 32 et une mémoire 34.

Le processeur 32 est adapté pour exécuter des logiciels compris dans la mémoire 32, pour déterminer le signal de tension local $S1_{ij}$ et pour transmettre le signal de tension local $S1_{ij}$ à l'unité d'application 30, pour qu'elle l'applique sur le réseau 20.

La mémoire 34 comprend un premier logiciel 35 de mémorisation d'une valeur initiale de fréquence prédéterminée, dite fréquence initiale prédéterminée, et d'une valeur initiale d'amplitude prédéterminée du signal de tension local $S1_{ij}$, ainsi qu'un logiciel 36 de mesure d'une puissance électrique active $P_{ij}$ délivrée sur le réseau 20.

La mémoire 24 comprend en outre un logiciel 38 de détermination de l'énergie électrique stockée $ES_{ij}$ dans l'organe de stockage 22 et un deuxième logiciel 40 de mémorisation de l'énergie électrique maximale stockable $ESM_j$ par l'organe de stockage 22.

La mémoire 34 comprend également un logiciel 42 de sauvegarde d'une équation, c'est-à-dire d'une fonction, donnant une valeur de consigne $A_{ij}$ de l'amplitude du signal de tension local $S1_{ij}$, un logiciel 44 de calcul de la valeur de consigne $A_{ij}$ et un logiciel 46 de modification du signal de tension local $S1_{ij}$. La valeur de consigne $A_{ij}$ de l'amplitude

est également appelée par la suite valeur de consigne d'amplitude $A_{ij}$.

Le premier logiciel de mémorisation 35 est configuré pour, en réponse à la déconnexion de l'organe principal 14 d'alimentation électrique du réseau 20, et à la réception d'un ordre de déclenchement de l'alimentation du réseau 20 par les unités de stockage 24, transmettre à l'unité d'application 30 les valeurs initiales d'amplitude et de fréquence prédéterminées. L'unité d'application 30 est alors configurée pour appliquer sur le réseau le signal de tension local en fonction de paramètres, tels que l'amplitude et la fréquence du signal de tension local. L'amplitude et la fréquence du signal de tension local sont, par exemple, égales respectivement à la valeur initiale d'amplitude prédéterminée et à la fréquence initiale prédéterminée.

Avantageusement, le premier logiciel de mémorisation 35 est également propre à mémoriser l'amplitude minimale de fonctionnement $A_{min}$ et la puissance électrique active maximale $Pn_j$.

Le logiciel de mesure 36 est propre à mesurer la puissance électrique active $P_{ij}$ délivrée par l'unité de stockage 16 et est associé à des moyens, non représentés, de mesure d'un courant et d'une tension en sortie de l'unité de stockage 16. La puissance électrique active $P_{ij}$ délivrée par l'unité de stockage 16 correspond à une puissance électrique $P_{ij}$ associée au signal de tension $S1_{ij}$.

Le logiciel de sauvegarde 42 est propre à une équation donnant la valeur de consigne de l'amplitude $A_{ij}$ du signal de tension local $S1_{ij}$, également appelée équation de calcul de la valeur de consigne. Cette équation est fonction de la puissance active mesurée $P_{ij}$, de l'énergie électrique stockée déterminée $ES_{ij}$ et de l'énergie maximale stockable mémorisée $ESM_j$.

Par la suite, l'énergie électrique stockée $ES_{ij}$ est également appelée énergie électrique disponible $ES_{ij}$ et correspond à la quantité d'énergie électrique stockée dans l'organe de stockage 22, c'est-à-dire à la capacité de l'organe de stockage 22, et est exprimée en Watt-heure (W.h).

Comme présenté précédemment pour l'état de la technique, dans un réseau essentiellement résistif, le fait de faire varier l'amplitude du signal de tension local en fonction de la puissance active mesurée $P_{ij}$, permet d'après l'équation (2), de contrôler la répartition de la puissance électrique active à délivrer aux charges 18, entre les unités de stockage 24. En outre, le fait de faire dépendre l'équation, qui donne la valeur de consigne de l'amplitude $A_{ij}$, de l'énergie électrique disponible et de l'énergie électrique maximale stockable permet, comme expliqué par la suite, d'améliorer la répartition de la puissance électrique active à délivrer entre les unités de stockage 24 et d'augmenter la durée pendant laquelle les unités de stockages 16 sont propres à alimenter le réseau 20, c'est-à-dire à alimenter les charges 18.

L'équation de calcul de la valeur de consigne est une fonction décroissante de la puissance électrique active $P_{ij}$ et croissante de l'énergie électrique disponible $ES_{ij}$. Préférentiellement, cette équation est fonction de la puissance électrique active mesurée $P_{ij}$ et d'un premier ratio entre l'énergie électrique disponible calculée $ES_{ij}$ et l'énergie électrique maximale stockable $ESM_j$. Le premier ratio représente l'état de charge de l'organe de stockage 22.

L'équation de calcul de la valeur de consigne est par exemple une première fonction affine. La première fonction affine dépend de la puissance électrique active mesurée $P_{ij}$ et comprend un coefficient directeur négatif, variant par exemple de manière décroissante en fonction du premier ratio.

A titre d'exemple, la première fonction affine vérifie :

$$A_{ij} = A' - (K1_j - K2_j * \frac{ES_{ij}}{ESM_j}) * P_{ij} \qquad (5)$$

où A' correspond à une valeur désirée pour l'amplitude du signal de tension local $S1_{ij}$ lorsque l'unité de stockage 16 est connectée au réseau 20 et qu'aucune charge 18 n'est connectée sur le réseau 20, c'est-à-dire, par exemple, à la valeur initiale d'amplitude prédéterminée,

$P_{ij}$, $ES_{ij}$, $ESM_j$, $A_{ij}$, $K1_j$ et $K2_j$ sont respectivement, pour l'unité de stockage 16 d'indice j, la puissance mesurée par le logiciel de mesure 36 à l'instant temporel d'indice i, l'énergie électrique disponible déterminée à l'instant temporel d'indice i, l'énergie électrique maximale stockable, la valeur de consigne de l'amplitude, un premier coefficient de valeur prédéterminée et un deuxième coefficient de valeur prédéterminée.

Préférentiellement, les premier et deuxième coefficients sont paramétrables.

Les premier $K1_j$ et deuxième $K2_j$ coefficients vérifient par exemple qu'un produit entre, d'une part, la différence entre le premier coefficient $K1_j$ et le deuxième coefficient $K2_j$ et, d'autre part, la puissance maximale $Pn_j$ est identique et égal à une constante U pour chacune des unités de stockage 16. En outre, si on considère que A' et $A_{min}$ sont identiques pour toutes les unités de stockage 16, on obtient l'égalité suivante :

$$(K1_j - K2_j) = \frac{(A' - A_{min})}{Pn_j} \qquad (6)$$

En d'autres termes, la différence entre le premier coefficient et le deuxième coefficient est égale au ratio entre, d'une part, la différence entre la valeur désirée pour l'amplitude du signal de tension local lorsque l'unité de stockage 16 est connectée au réseau 20 et qu'aucune charge 18 n'est connectée sur le réseau 20 et l'amplitude minimale de fonctionnement et, d'autre part, la puissance active maximale $Pn_j$.

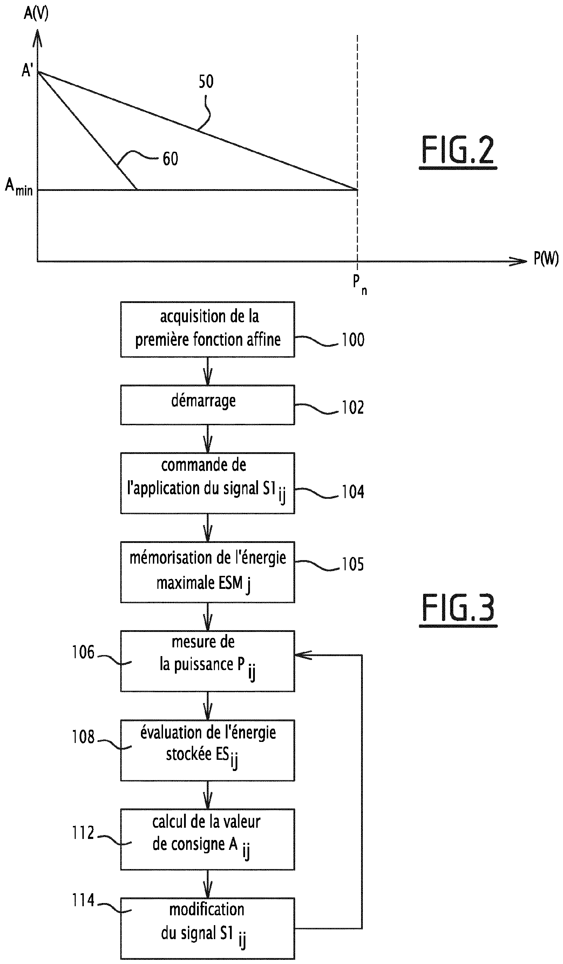

La figure 2 présente, pour deux unités de stockage 16 données, une première courbe 50 et une deuxième courbe 60 représentant la première fonction affine, les deux unités de stockage ayant deux valeurs différentes du premier ratio. Plus précisément, la première courbe 50 correspond à une valeur du premier ratio supérieure à celle choisie pour la deuxième courbe 60. En d'autres termes, en considérant que les deux unités de stockage données 16 disposent de la même énergie maximale $ESM_j$, la première courbe 50 représente, par exemple, la valeur de consigne d'amplitude calculée via la première fonction affine, lorsque l'énergie électrique disponible $ES_{ij}$ est sensiblement égale à l'énergie électrique maximale stockable $ESM_j$ et la deuxième courbe 60 représente, par exemple, la valeur de consigne d'amplitude calculée via la première fonction affine, lorsque l'énergie électrique disponible est inférieure à l'énergie électrique maximale stockable, par exemple deux fois plus faible. Il apparait ainsi à la figure 2 que, plus l'énergie électrique disponible $ES_{ij}$ est faible, comparativement à l'énergie maximale stockable $ESM_j$, plus la consigne d'amplitude $A_{ij}$ baisse fortement en fonction de la puissance active mesurée $P_{ij}$. Ceci permet d'avoir une valeur de consigne d'amplitude $A_{ij}$ plus importante pour les unités de stockage dans lesquelles l'énergie électrique disponible $ES_{ij}$ est plus élevée comparativement à l'énergie maximale stockable $ESM_j$.

Ainsi, une unité de stockage 16, pour laquelle le premier ratio est supérieur à celui d'une autre unité de stockage 16, a tendance à délivrer plus de puissance électrique active au réseau 20. Les organes de stockages 22 se déchargent donc à des vitesses différentes en fonction du premier ratio, ce qui permet d'augmenter une durée pendant laquelle les unités de stockage 16 sont propres à alimenter électriquement les charges, notamment lorsque leurs organes de stockage 22 respectifs ne stockent pas la même quantité d'énergie $ES_{ij}$.

Le logiciel de calcul 44 est adapté pour calculer la valeur de consigne $A_{ij}$ de l'amplitude à partir de la première fonction affine. Ainsi, le logiciel de calcul 44 est par exemple adapté pour calculer périodiquement la valeur de consigne d'amplitude $A_{ij}$.

Le logiciel de modification 46, est propre à modifier la valeur de l'amplitude du signal de tension local $S1_{ij}$ pour que la valeur de l'amplitude du signal de tension local soit égale à la valeur de consigne d'amplitude calculée par le logiciel de calcul 44. Plus précisément, le logiciel de modification 46 est par exemple propre à fixer l'amplitude du signal de tension égale à la valeur de consigne d'amplitude calculée par le logiciel de calcul 44, à chaque fois qu'une nouvelle valeur de consigne d'amplitude $A_{ij}$ est calculée par le logiciel de calcul 44.

Le logiciel de modification 46 est, par exemple, propre à transmettre la valeur de consigne d'amplitude $A_{ij}$ à l'unité d'application 30.

Le fonctionnement du système électrique 12 va désormais être présenté à l'aide de l'organigramme de procédé de la figure 3.

Lors d'une étape initiale d'acquisition 100, chaque unité de stockage 16 acquiert, via l'exécution du logiciel de sauvegarde 42, l'équation donnant la valeur de consigne d'amplitude $A_{ij}$, c'est-à-dire la première fonction affine, et mémorise cette équation. Avantageusement, l'équation est déterminée par un opérateur, puis transmise par l'opérateur à la mémoire 34, et plus précisément au logiciel de sauvegarde 42. De plus, les valeurs initiales d'amplitude et de fréquence prédéterminées sont mémorisées. Avantageusement, l'amplitude minimale de fonctionnement $A_{min}$ et la puissance électrique active maximale respective $Pn_j$ sont également mémorisées.

Lors d'une étape de démarrage 102, l'organe principal d'alimentation électrique est déconnecté du réseau 20 et les unités de stockage 16 sont commandées pour alimenter électriquement le réseau 20 et les charges 18.

Puis, lors d'une étape de commande 104, chaque module de contrôle 24 commande l'application du signal de tension alternatif local $S1_{ij}$ au réseau électrique 20, pour l'alimentation électrique des charges 18. Le signal de tension local $S1_{ij}$ a une fréquence égale à la valeur initiale de fréquence prédéterminée et une amplitude égale à la valeur initiale d'amplitude prédéterminée.

Puis, au cours d'une étape 105 de mémorisation, chaque unité de stockage 16 mémorise l'énergie électrique maximale stockable $ESM_j$ par l'organe de stockage 22 correspondant, i.e. la capacité maximale de l'organe de stockage 22.

Ensuite, au cours d'une étape 106 de mesure, chaque unité de stockage 16 mesure, via le logiciel de mesure 36, la puissance électrique active $P_{ij}$ qu'elle délivre en sortie au réseau 20.

Lors d'une étape suivante de détermination 108, chaque module de contrôle 24, c'est-à-dire chaque unité de stockage 16, calcule ou mesure l'énergie électrique disponible $ES_{ij}$ dans l'organe de stockage 22 correspondant, i.e. la capacité disponible de l'organe de stockage 22.

Au cours d'une étape de calcul 112, chaque unité de stockage 16 calcule la valeur de la consigne d'amplitude $A_{ij}$ correspondante à partir de l'équation acquise, c'est à dire de la puissance active mesurée $P_{ij}$, de l'énergie électrique disponible déterminée $ES_{ij}$ et de l'énergie maximale stockable mémorisée $ESM_j$. La valeur de consigne d'amplitude $A_{ij}$ est donc calculée en fonction de l'énergie électrique disponible déterminée et prend différentes valeurs non nulles pour différentes valeurs non nulles de l'énergie électrique disponible $ES_{ij}$.

Puis, lors d'une étape de modification 114, chaque unité de stockage modifie le signal de tension local $S1_{ij}$. Plus précisément, la valeur de l'amplitude du signal de tension est modifiée pour être égale à la valeur de la consigne d'amplitude $A_{ij}$ déterminée à l'étape 112.

Enfin, suite à l'étape de modification 114, l'étape de mesure 106 est répétée et, plus généralement, les étapes 106 à 114 sont répétées. Une périodicité avec laquelle ces étapes sont répétées est par exemple égale à 10 millisecondes.

La valeur de la consigne d'amplitude $A_{ij}$ est ainsi régulièrement mise à jour en fonction de la puissance active mesurée $P_{ij}$ et de l'énergie électrique disponible déterminée $ES_{ij}$, ce qui permet d'optimiser la répartition entre les unités de stockage 16, de la puissance électrique à délivrer aux charges 18. En effet, les organes de stockage 22 ne se déchargent pas tous à la même vitesse, mais avec une vitesse optimisée en fonction de la quantité d'énergie qu'ils stockent, c'est-à-dire de la quantité d'énergie restante dans chaque organe de stockage 22. La durée pendant laquelle les unités de stockage sont propres à alimenter les charges 18, c'est-à-dire notamment à délivrer la puissance électrique active nécessaire au fonctionnement des charges 18, est ainsi augmentée.

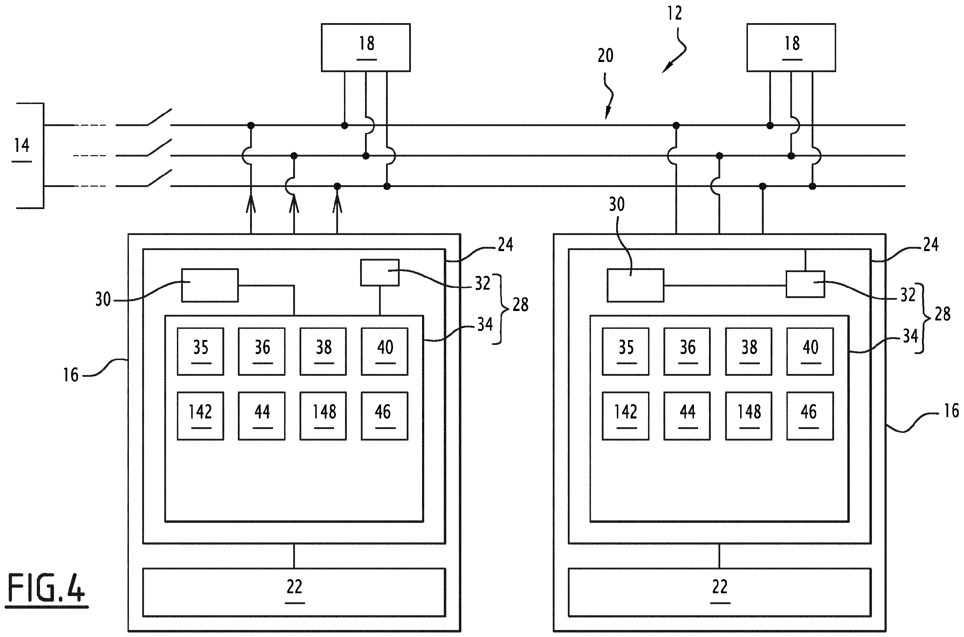

Dans le deuxième mode de réalisation présenté à la figure 4, les éléments similaires à ceux du premier mode de réalisation portent les mêmes références et seules les différences entre les premier et deuxième modes de réalisation seront présentées en détail par la suite.

Dans le système électrique 12 présenté à la figure 4, comparativement au premier mode de réalisation, la mémoire 34 de chaque unité de stockage 16 comprend un premier logiciel 142 de sauvegarde de fonctions donnant chacune une valeur de consigne d'amplitude $A_{ij}$, remplaçant le logiciel de sauvegarde 42 présenté dans le premier mode de réalisation, et un logiciel 148 de sélection d'une des fonctions donnant la valeur de la consigne d'amplitude $A_{ij}$.

Le logiciel de sauvegarde 142 est par exemple propre à sauvegarder la première fonction affine présentée dans le premier mode de réalisation, ainsi qu'une deuxième fonction affine et une troisième fonction affine donnant chacune la valeur de consigne d'amplitude $A_{ij}$.

Le logiciel de sauvegarde 142 est également propre à mémoriser des données spécifiques prédéterminées, propres aux unités de stockage 16. Les données spécifiques sont, par exemple, un seuil de consigne d'amplitude $A_L$ et un seuil de puissance active $P_L$.

La deuxième équation affine est par exemple la suivante :

$$A_{ij} = A_{\min} + K3_{ij} * (Pn_j - P_{ij}), \qquad (7)$$

avec

$$K3_{ij} = \frac{(A' - (K1_j - K2_j * \frac{ES_{ij}}{ESM_j}) * P_L - A_{\min})}{Pn_j - P_L} \qquad (8)$$

La troisième équation affine est la suivante :

$$A_{ij} = A_{\min} + K4_{ij} * (Pn_j - P_{ij}), \qquad (9)$$

avec

$$K4_{ij} = \frac{(A_L - A_{\min})}{Pn_j - \frac{A' - A_L}{(K1_j - K2_j * \frac{ES_{ij}}{ESM_j})}} \qquad (10)$$

Précédemment à la sélection d'une des fonctions donnant la valeur de la consigne d'amplitude $A_{ij}$, correspondant à la valeur de consigne d'amplitude à appliquer à l'instant temporel d'indice i, le logiciel de sélection 148 est apte à mémoriser une valeur de consigne d'amplitude temporaire $A_{(i-1)j}$, correspondant à la valeur de consigne d'amplitude appliquée à l'instant temporel d'indice i-1. Par défaut, la valeur de consigne d'amplitude temporaire est, par exemple, égale à A'.

Le logiciel de sélection 148 est apte à comparer la valeur de consigne temporaire $A_{(i-1)j}$ avec le seuil de consigne d'amplitude $A_L$, ainsi qu'à comparer la puissance active mesurée $P_{ij}$ avec le seuil de puissance active $P_L$.

Le logiciel de sélection 148 est également apte à calculer une puissance active de référence $P_{ref}$ et une valeur de consigne d'amplitude de référence $A_{ref}$ à partir des formules de calcul suivantes :

$$P_{ref} = Pn_j - \left(\frac{Pn_j - P_L}{A_L - A_{min}}\right) * (A_{(i-1)j} - A_{min}), \text{ et} \qquad (11)$$

$$A_{ref} = A_{min} + \left(\frac{A_L - A_{min}}{Pn_j - P_L}\right) * (Pn_j - P_{ij}), \qquad (12)$$

Le logiciel de sélection 148 est, en outre, adapté pour comparer la puissance active mesurée $P_{ij}$ avec la puissance active de référence $P_{ref}$ et la valeur de consigne d'amplitude temporaire $A_{(i-1)j}$ avec la valeur de consigne d'amplitude de référence $A_{ref}$.

Le logiciel de sélection 148 est ainsi propre à sélectionner une fonction parmi la première, la deuxième et la troisième fonctions affines, en fonction du résultat des comparaisons entre la valeur de consigne temporaire $A_{(i-1)j}$ et le seuil de consigne d'amplitude $A_L$, la puissance active $P_{ij}$ mesurée par le logiciel de mesure 36 et le seuil de puissance active $P_L$, la puissance active $P_{ij}$ mesurée par le logiciel de mesure 36 et la puissance active de référence $P_{ref}$, et entre la valeur de consigne temporaire $A_{(i-1)j}$ et la valeur de consigne d'amplitude de référence $A_{ref}$.

Par exemple, si la valeur de consigne d'amplitude temporaire $A_{(i-1)j}$ est strictement supérieure au seuil de consigne d'amplitude $A_L$ et si la puissance active mesurée $P_{ij}$ est strictement inférieure au seuil de puissance active $P_L$, alors le logiciel de sélection 148 est propre à sélectionner la première fonction affine.

De plus, si la valeur de consigne d'amplitude temporaire $A_{(i-1)j}$ est supérieure ou égale à la valeur de consigne d'amplitude de référence $A_{ref}$ et si la puissance active mesurée $P_{ij}$ est supérieure ou égale au seuil de puissance active $P_L$, alors le logiciel de sélection 148 est propre à sélectionner la deuxième fonction affine, dont un coefficient directeur est inférieur à celui de la première équation affine.

Si la valeur de consigne d'amplitude temporaire $A_{(i-1)j}$ est inférieure ou égale au seuil de consigne d'amplitude $A_L$ et si la puissance active mesurée $P_{ij}$ est strictement inférieure à la puissance active de référence $P_{ref}$, alors le logiciel de sélection 148 est propre à sélectionner la troisième fonction affine, dont un coefficient directeur est supérieur à celui de la première équation affine.

En d'autre termes, le logiciel de sélection 148 est propre à déterminer une équation donnant la valeur de consigne $A_{ij}$ de l'amplitude du signal de tension local $S1_{ij}$, correspondant à une fonction linéaire par morceaux qui dépend notamment de la puissance active mesurée $P_{ij}$ et du premier ratio.

Ainsi, le logiciel de sélection 148 est adapté pour que, pour chaque unité de stockage 16, la fonction sélectionnée, c'est-à-dire l'équation déterminée, vérifie que la valeur de consigne d'amplitude $A_{ij}$ est égale à l'amplitude minimale de fonctionnement $A_{min}$ lorsque la puissance électrique active mesurée $P_{ij}$ est égale à la puissance active maximale $Pn_j$

Le logiciel de calcul 44 est adapté pour calculer la valeur de consigne $A_{ij}$ de l'amplitude à partir de la fonction sélectionnée par le logiciel de sélection 148.

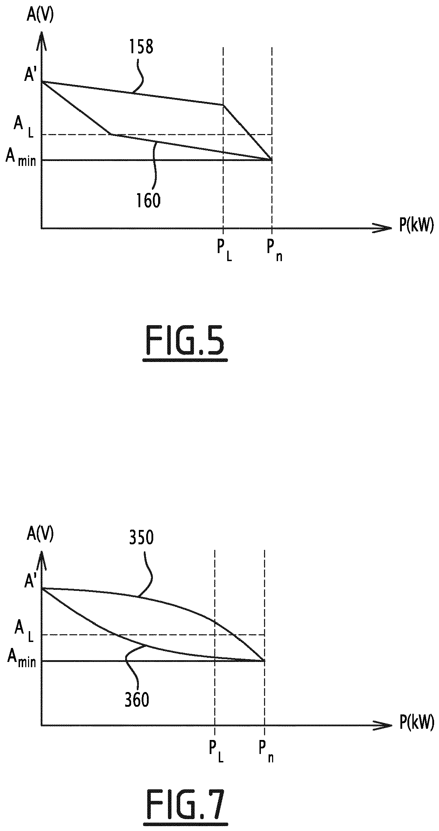

La figure 5 présente une troisième courbe 158 et une quatrième courbe 160 représentant l'équation donnant la valeur de consigne $A_{ij}$ de l'amplitude du signal de tension local $S1_{ij}$, pour deux valeurs différentes du premier ratio. La troisième courbe 158 est une première fonction linéaire par morceaux déterminée à partir des première et deuxième fonctions. La quatrième courbe 160 est une deuxième fonction linéaire par morceaux déterminée à partir des première et troisième fonctions.

La première fonction linéaire par morceaux est égale à la première fonction affine dans un premier intervalle de puissance active [0 ; PL] et à la deuxième fonction affine dans un deuxième intervalle de puissance active [PL ; Pnj]. La borne inférieure du deuxième intervalle étant supérieure ou égale à la borne supérieure du premier intervalle et le deuxième intervalle comprenant la puissance active maximale Pnj. Dans l'exemple décrit, la borne inférieure du deuxième intervalle est égale à la borne supérieure du premier intervalle.

De même, la deuxième fonction linéaire par morceaux est égale à la première fonction affine, dans un troisième intervalle de puissance active et à la troisième équation affine dans un quatrième intervalle de puissance active. La borne inférieure du quatrième intervalle étant supérieure ou égale à la borne supérieure du troisième intervalle et le quatrième intervalle comprenant la puissance active maximale Pnj. Dans l'exemple décrit, la borne inférieure du quatrième intervalle est égale à la borne supérieure du troisième intervalle.

Comme présenté à la figure 5, les première et deuxième fonctions linéaires par morceaux convergent vers l'amplitude minimale de fonctionnement $A_{min}$, lorsque la puissance active mesurée $P_{ij}$ est égale à la puissance active maximale $Pn_j$. La troisième courbe 158 et la quatrième courbe 160 sont associées chacune à l'une des unités de stockage 16.

Les modules de contrôle 24 sont ainsi configurés pour être aptes à délivrer la puissance active maximale $Pn_j$, lorsque les charges 18 le requièrent. Plus précisément, les première et deuxième fonctions linéaires par morceaux sont adaptées pour que la répartition de la puissance à délivrer aux charges 18 soit optimisée et que les unités de stockages délivrent chacune sur le réseau 20 une puissance électrique active propre à aller jusqu'à la valeur de la puissance active maximale $Pn_j$.

Comme présenté à la figure 5, chaque module de contrôle 24 contrôle efficacement la valeur de la consigne d'amplitude $A_{ij}$ et donc la répartition de la puissance entre les unités de stockages 16, jusqu'à ce que l'une des troisième 158 et quatrième 160 courbes atteigne une ordonnée égale à la valeur d'amplitude minimale de fonctionnement $A_{min}$. Ainsi, le fait de faire converger les troisième 158 et quatrième 160 courbes vers l'amplitude minimale de fonctionnement $A_{min}$, lorsque la puissance active mesurée $P_{ij}$ est égale à la puissance active maximale $Pn_j$, permet d'avoir un contrôle efficace de la répartition de la puissance à délivrer entre les unités de stockages 16 , pour un intervalle de puissance élargi par rapport au premier mode de réalisation et égale à [0 ; 2Pn_j] dans l'exemple des figures 4 et 5.

En d'autres termes, dans le premier mode de réalisation, l'ensemble des unités de stockage 16 est propre à délivrer sur le réseau 20 une puissance totale maximale inférieure à la somme des puissances actives maximales $Pn_j$, lorsque le premier ratio d'au moins l'une des unités de stockage 16 est différent de 100%, tandis que dans le deuxième mode de réalisation la puissance totale maximale est égale à la somme des puissances actives maximales $Pn_j$ tant que le premier ratio est strictement positif pour toutes les unités de stockage 16, et plus précisément tant que le premier ratio est de valeur suffisante pour que chaque unité de stockage soit apte à délivrer la puissance active maximale $Pn_j$ correspondante.

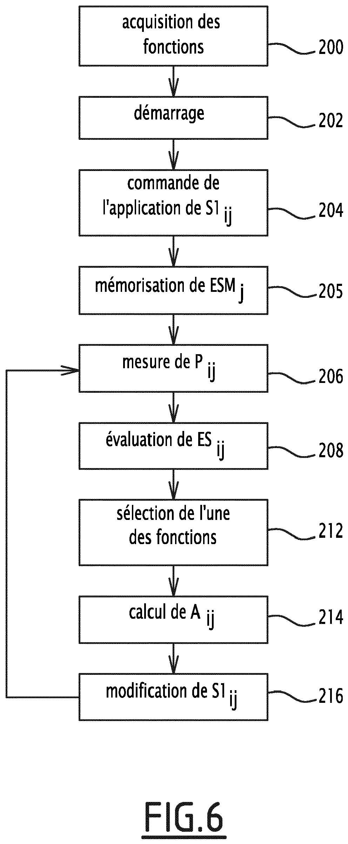

Le fonctionnement du système électrique 12 selon le deuxième mode de réalisation va désormais être présenté à l'aide de l'organigramme de procédé de la figure 6.

Lors d'une première étape d'acquisition 200, les première, deuxième et troisième fonctions affines, le seuil de consigne d'amplitude $A_L$ et le seuil de puissance active $P_L$ sont mémorisés. Les première, deuxième et troisième fonctions affines et les seuils de consigne d'amplitude $A_L$ et de puissance active $P_L$ sont, par exemple, saisis par un opérateur lors de l'installation de l'unité de stockage 16 sur le réseau 20. De plus, les valeurs initiales prédéterminées d'amplitude et de fréquence, ainsi que l'amplitude minimale de fonctionnement $A_{min}$ et la puissance électrique active maximale $Pn_j$ sont également mémorisées.

Puis, le procédé comprend des étapes de démarrage 202, de commande 204, de mémorisation 205, de mesure 206 et de détermination 208 similaires respectivement aux étapes 102, 104, 105, 106 et 108 présentées pour le premier mode de réalisation.

Puis, lors d'une étape de sélection 212, le logiciel de sélection 148 mémorise la valeur de consigne d'amplitude temporaire $A_{(i-1)j}$ et calcule la valeur de consigne d'amplitude de référence $A_{ref}$ et la puissance active de référence $P_{ref}$. Lors de la première exécution de l'étape de sélection 102, la valeur de consigne d'amplitude temporaire $A_{(i-1)j}$ est par exemple fixée égale à A'.

Ensuite, la valeur de la consigne d'amplitude temporaire $A_{(i-1)j}$ est comparée avec le seuil de consigne d'amplitude $A_L$ et la valeur de consigne d'amplitude de référence $A_{ref}$, tandis que la puissance active $P_{ij}$ mesurée à l'étape 208 est comparée avec le seuil de puissance active $P_L$ et la puissance active de référence $P_{ref}$. Puis, le logiciel de sélection sélectionne la fonction à utiliser pour le calcul de la consigne d'amplitude $A_{ij}$ de manière similaire à ce qui a été présenté ci-dessus.

Ensuite, lors d'une étape de calcul 214, la consigne d'amplitude $A_{ij}$ est calculée à partir de la fonction sélectionnée à l'étape 212 et donc notamment à partir de la puissance active mesuré $P_{ij}$, de l'énergie électrique disponible déterminée $ES_{ij}$ et de l'énergie maximale stockable mémorisée $ESM_j$.

Enfin, une étape de modification 216 similaire à l'étape 114 présentées pour le premier mode de réalisation est effectuée. Puis, suite à l'étape de modification 216, l'étape de mesure 206 est répétée.

Selon un troisième mode de réalisation de l'invention, un système électrique 12 tel que présenté à la figure 1 est utilisé. Cependant, dans le troisième mode de réalisation, le logiciel de sauvegarde est différent du logiciel de sauvegarde 42 présenté dans le premier mode de réalisation.

Ainsi, selon le troisième mode de réalisation, le logiciel de sauvegarde est adapté pour mémoriser ou acquérir une quatrième fonction donnant la consigne d'amplitude $A_{ij}$ du signal de tension local $S1_{ij}$, différente de la première fonction affine. La quatrième fonction donne la valeur de consigne $A_{ij}$ de l'amplitude du signal de tension local en fonction de la puissance active $P_{ij}$, de l'énergie électrique disponible $ES_{ij}$ et de l'énergie maximale stockable $ESM_j$.

La quatrième fonction est une fonction décroissante de la puissance électrique active et croissante de l'énergie

électrique disponible $ES_{ij}$. La quatrième fonction est, comme représenté à la figure 7, une fonction continue de la puissance active mesurée $P_{ij}$ qui converge vers l'amplitude minimale de fonctionnement $A_{min}$ lorsque la puissance active mesurée $P_{ij}$ est égale à la puissance active maximale $Pn_j$.

La quatrième fonction vérifie par exemple :

$$A_{ij} = A' - (\frac{(A' - A_{min})}{Pn_j}) * P_{ij} + dk * (C_{ij} - 0,5) * P_{ij}^{1+C_{ij}} * (Pn_j - P_{ij})^{2-C_{ij}}, \qquad (13)$$

avec $C_{ij} = \dfrac{ES_{ij}}{ESM_j}$ où dk est un paramètre de valeur prédéterminée, déterminé de façon empirique.

La figure 7 montre des cinquième 350 et sixième 360 courbes, représentant le résultat de la quatrième fonction, pour deux valeurs différentes du premier ratio correspondant chacune à l'une des unités de stockage 16. Les cinquième 350 et sixième 360 courbes convergent vers l'amplitude minimale de fonctionnement $A_{min}$ lorsque la puissance active mesurée $P_{ij}$ est égale à la puissance active maximale $Pn_j$. Les cinquième 350 et sixième 360 courbes présentent globalement la forme des troisième 158 et respectivement quatrième 160 courbes.

Les avantages du troisième mode de réalisation sont similaires à ceux du deuxième mode de réalisation. Un avantage supplémentaire du troisième mode de réalisation est la simplification de la fonction permettant de calculer la consigne d'amplitude $A_{ij}$ qui n'est plus une fonction linéaire par morceaux, mais une fonction continue.

Le fonctionnement du système électrique 12 selon le troisième mode de réalisation est similaire à celui présenté pour le premier mode de réalisation et présente le même organigramme que celui présenté à la figure 3, mis à part le fait que lors de l'étape d'acquisition, la fonction mémorisée est la quatrième fonction.

Dans les trois modes de réalisation présentés ci-dessus, la valeur de consigne d'amplitude $A_{ij}$ est fonction de la puissance active mesurée $P_{ij}$, ce qui est connu de l'état de la technique, mais également selon l'invention de l'énergie électrique disponible $ES_{ij}$. Cette valeur de consigne est plus généralement fonction du premier ratio, ce qui permet d'augmenter la durée pendant laquelle les unités de stockage sont propres à alimenter le réseau 20, notamment lorsque le premier ratio est différent entre les unités de stockage 16.

En outre, selon le deuxième et troisième modes de réalisation, le fait que l'équation de calcul de la valeur de consigne soit assimilable à une fonction décroissante de la puissance active mesurée $P_{ij}$, qui converge vers la valeur minimale de fonctionnement lorsque la puissance active mesurée $P_{ij}$ est égale à la puissance active maximale $Pn_j$, permet aux unités de stockage 16 de délivrer une puissance totale élevée sur le réseau 20 lorsque les charges requièrent une forte puissance. Les unités de stockage 16 sont par exemple propres à délivrer au réseau une puissance totale maximale égale à la somme de leurs puissances actives maximales $Pn_j$ et la répartition entre les unités de stockage 16 de la puissance électrique à délivrer aux charges 18 est efficace. En d'autres termes, dans l'exemple des figures 5 et 7, la puissance totale maximale délivrée par l'ensemble des unités de stockage 16 sur le réseau 20 est égale à la somme des puissances actives maximales $Pn_j$, tant que le premier ratio est strictement positif pour toutes les unités de stockage 16.

Les deuxième et troisième modes de réalisation offrent à la fois un fonctionnement optimisé en termes de puissance totale maximale délivrable par les unités de stockage 16 et de durée pendant laquelle les unités de stockage 16 sont propres à alimenter le réseau 20.

En variante, l'invention s'applique également à un réseau 20 inductif et les modules de contrôle 24 sont alors adaptés pour contrôler la fréquence du signal de tension local $S1_{ij}$ en fonction de la puissance active mesurée $P_{ij}$. Selon cette variante, le fonctionnement est identique à ce qui a été présenté précédemment, et la valeur de consigne d'amplitude $A_{ij}$ est remplacée par une valeur de consigne de fréquence $F_{ij}$, la valeur désirée A' de l'amplitude du signal de tension local, lorsque l'unité de stockage 16 est connectée au réseau et qu'aucune charge 18 n'est connectée sur le réseau, est remplacée par une valeur F' désirée de la fréquence du signal de tension local lorsque l'unité de stockage 16 est connectée au réseau et qu'aucune charge 18 n'est connectée sur le réseau. Elle est par exemple égale à la fréquence initiale prédéterminée, et l'amplitude minimale de fonctionnement $A_{min}$ est par exemple remplacée par la fréquence minimale de fonctionnement $F_{min}$. En outre, dans cette variante, les premier $K1_j$ et deuxième $K2_j$ coefficients de valeurs prédéterminées sont par exemple remplacés par des troisième $K3_j$ et quatrième $K4_j$ coefficients de valeurs prédéterminées, le seuil de consigne d'amplitude $A_L$ est remplacé par un seuil de consigne de fréquence $F_L$ et la valeur de consigne d'amplitude de référence $A_{ref}$ est remplacée par une valeur de consigne de fréquence de référence $F_{ref}$.

Dans cette variante la première équation affine est par exemple égale à :

$$F_{ij} = F' - (K3_j - K4_j * \frac{ES_{ij}}{ESM_j}) * P_{ij} \qquad (14)$$

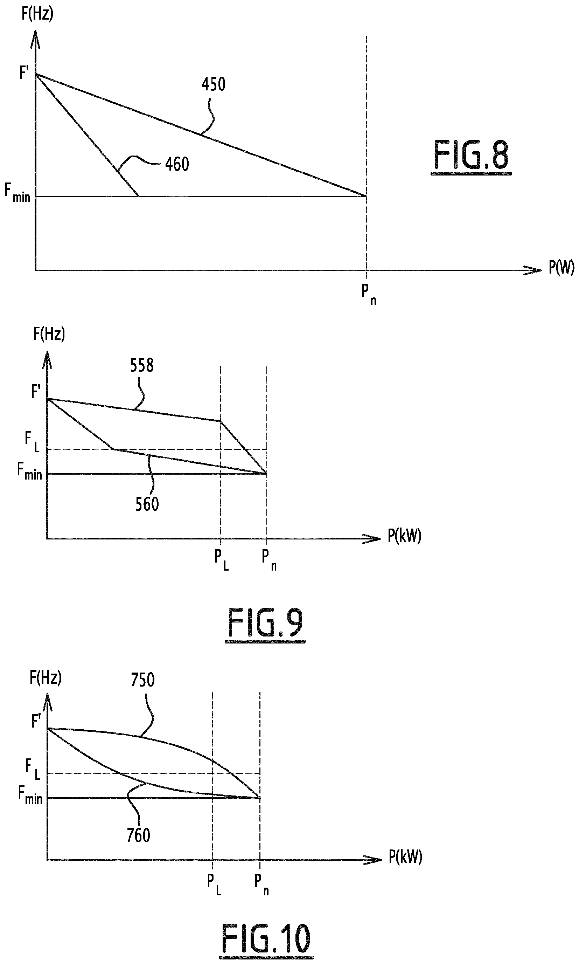

De plus, dans la variante évoqué ci-dessus, on obtient à la place des figures 2, 5 et 7, les figures 8, 9 et 10 qui sont respectivement analogues aux figures 2, 5 et 7 et pour lesquelles les références sont augmentées de 400 par rapport respectivement aux figures 2, 5 et 7. Les figures 8, 9 et 10 correspondent respectivement aux premier, deuxième et troisième modes de réalisation, qui sont adaptés à cette variante.

Dans les modes de réalisation présentés ci-dessus, la source d'énergie électrique, c'est-à-dire la source de puissance électrique, correspond à une unité de stockage et plus généralement à une source de puissance, adaptée pour fonctionner comme un générateur de tension et apte à stocker une quantité limitée d'énergie électrique. L'unité de stockage est par exemple une batterie, une pile à combustible ou un générateur diesel qui a un réservoir limité.

## Revendications

1.  Procédé de contrôle de la puissance électrique délivrée sur un réseau électrique par au moins deux sources (16) d'énergie électrique, chaque source d'énergie (16) étant connectée au réseau (20) et comprenant un organe (22) de stockage d'énergie électrique, le procédé comprenant pour chaque source d'énergie (16) les étapes suivantes :

    - l'application (104 ; 204) par la source d'énergie (16) d'un signal de tension alternatif ($S1_{ij}$) sur le réseau électrique (20) pour l'alimentation électrique du réseau, un paramètre du signal de tension ($S1_{ij}$) ayant une valeur initiale prédéterminée,
    - la mesure (106 ; 206) d'une puissance électrique ($P_{ij}$) associée au signal de tension ($S1_{ij}$) appliqué,
    - la détermination (108 ; 208) d'une énergie électrique ($ES_{ij}$) stockée dans l'organe de stockage (22),
    - le calcul (112 ; 214) d'une valeur de consigne ($A_{ij}$ ou $F_{ij}$) du paramètre du signal de tension en fonction de la puissance mesurée,
    - la modification (114 ; 216) du signal de tension, la valeur du paramètre du signal de tension étant modifiée pour être égale à la valeur de consigne calculée ($A_{ij}$, $F_{ij}$),

    caractérisé en ce que lors de l'étape de calcul (112 ; 214), la valeur de consigne ($A_{ij}$, $F_{ij}$) est calculée en fonction en outre de l'énergie électrique stockée ($ES_{ij}$) déterminée et est une fonction décroissante de la puissance électrique ($P_{ij}$) et une fonction croissante de l'énergie électrique stockée ($ES_{ij}$),
    en ce que chaque source d'énergie est adaptée pour délivrer une puissance maximale ($Pn_j$) au réseau (20) et pour que le paramètre du signal de tension soit supérieur à une valeur minimale de fonctionnement ($A_{min}$ ou $F_{min}$), et et en ce que, pour chaque source d'énergie (16), lors de l'étape de calcul (112 ; 214), la valeur de consigne ($A_{ij}$ ou $F_{ij}$) est égale à la valeur minimale de fonctionnement ($A_{min}$ ou $F_{min}$) lorsque la puissance électrique ($P_{ij}$) mesurée est égale à la puissance maximale ($Pn_j$).

2.  Procédé selon la revendication 1, dans lequel le paramètre du signal de tension est choisi parmi une amplitude du signal de tension et une fréquence du signal de tension, selon le type du réseau (20).

3.  Procédé selon la revendication 1 ou 2, dans lequel, précédemment à l'étape de calcul (112 ; 214), le procédé comprend, pour chaque source d'énergie, l'étape suivante :

    - la mémorisation (105 ; 205) d'une énergie électrique maximale ($ESM_{ij}$) apte à être stockée par l'organe de stockage (22),

    et dans lequel, lors de l'étape de calcul (112 ; 214), la valeur de consigne est fonction d'un premier ratio entre l'énergie électrique stockée ($ES_{ij}$) et l'énergie électrique maximale ($ESM_{ij}$).

4.  Procédé selon la revendication 3, dans lequel, lors de l'étape de calcul, la valeur de consigne est déterminée à partir d'une première fonction affine, la première fonction affine dépendant de la puissance électrique ($P_{ij}$) mesurée et ayant un coefficient directeur négatif.

5.  Procédé selon la revendication 4, dans lequel la première équation affine vérifie l'équation suivante :

$$B_{ij} = B' - (K1_j - K2_j * \frac{ES_{ij}}{ESM_j}) * P_{ij},$$

où i, j sont des indices entiers correspondant respectivement à un instant temporel donné et à un identifiant de la source d'énergie,

B' est une valeur désirée pour le paramètre du signal de tension lorsque la source d'énergie (16) est connectée au réseau (20) et qu'aucune charge n'est connectée au réseau, et

$P_{ij}$, $ES_{ij}$, $ESM_j$, $B_{ij}$, $K1_j$ et $K2_j$ sont respectivement la puissance, l'énergie électrique stockée, l'énergie électrique maximale, la valeur de consigne, un premier coefficient de valeur prédéterminée et un deuxième coefficient de valeur prédéterminée.

6. Procédé selon la revendication 5, dans lequel chaque source d'énergie (16) est adaptée pour délivrer une puissance maximale ($Pn_j$) au réseau, dans lequel un produit entre, d'une part, la différence entre le premier coefficient ($K1_j$) et le deuxième coefficient ($K2_j$) et, d'autre part, la puissance maximale ($Pn_j$) est identique pour chacune des sources d'énergie (16).

7. Procédé selon la revendication 4, dans lequel, lors de l'étape de calcul, la valeur de consigne est calculée à partir d'une fonction continue linéaire par morceaux qui est égale à la première fonction affine pour un premier intervalle de puissance et à une deuxième fonction affine pour un deuxième intervalle de puissance, le deuxième intervalle comprenant la puissance maximale ($Pn_j$), et la borne inférieure du deuxième intervalle étant supérieure ou égale à la borne supérieure du premier intervalle.

8. Procédé selon l'une quelconque des revendications 1 à 3, dans lequel chaque source d'énergie est adaptée pour délivrer une puissance maximale $Pn_j$ au réseau et pour que le paramètre du signal de tension soit supérieur à une valeur minimale de fonctionnement $B_{min}$, et

dans lequel, lors de l'étape de calcul, le paramètre du signal de tension est calculé à partir de l'équation suivante :

$$B_{ij} = B' - (\frac{(B' - B_{min})}{Pn_j}) * P_{ij} + dk * (C_{ij} - 0,5) * P_{ij}^{1+C_{ij}} * (Pn_j - P_{ij})^{2-C_{ij}},$$

avec $C_{ij} = \frac{ES_{ij}}{ESM_j}$

où i, j sont des indices entiers correspondant respectivement à un instant temporel donné et à un identifiant de la source d'énergie,

B' est une valeur désirée pour le paramètre du signal de tension lorsque la source d'énergie est connectée au réseau et qu'aucune charge n'est connectée sur le réseau,

dk est un paramètre de valeur prédéterminée, et

$P_{ij}$, $ES_{ij}$, $ESM_j$, $B_{ij}$, sont respectivement la puissance, l'énergie électrique stockée, l'énergie électrique maximale, et la valeur de consigne.

9. Système électrique (12) comprenant au moins deux sources d'énergie électrique (16), chaque source d'énergie (16) étant connectée au réseau électrique (20) et comprenant un organe (22) de stockage d'énergie électrique et un module (24) de contrôle de l'organe de stockage, chaque module de contrôle (24) comprenant :

- une unité (30) d'application d'un signal de tension alternatif ($S1_{ij}$) sur le réseau électrique (20) pour l'alimentation électrique du réseau, un paramètre du signal de tension ayant une valeur initiale prédéterminée,
- des moyens (36) de mesure d'une puissance électrique ($P_{ij}$) associée au signal de tension ($S1_{ij}$) appliqué,
- des moyens (38) de détermination d'une énergie électrique ($ES_{ij}$) stockée dans l'organe de stockage (22),
- des moyens (44) de calcul d'une valeur de consigne ($A_{ij}$, $F_{ij}$) du paramètre du signal de tension en fonction de la puissance mesurée, et
- des moyens (46) de modification du signal de tension ($S1_{ij}$) propres à modifier et la valeur du paramètre du signal de tension pour que la valeur du paramètre du signal de tension soit égale à la valeur de consigne calculée ($A_{ij}$, $F_{ij}$),

**caractérisé en ce que** les moyens de calcul (44) sont propres à calculer la valeur de consigne ($A_{ij}$, $F_{ij}$) en fonction en outre de l'énergie électrique stockée ($ES_{ij}$) déterminée, la valeur de consigne ($A_{ij}$, $F_{ij}$) étant une fonction décroissante de la puissance électrique ($P_{ij}$) et une fonction croissante de l'énergie électrique stockée ($ES_{ij}$),
**en ce que** chaque source d'énergie est adaptée pour délivrer une puissance maximale ($Pn_j$) au réseau (20) et pour que le paramètre du signal de tension soit supérieur à une valeur minimale de fonctionnement ($A_{min}$ ou $F_{min}$), et et **en ce que**, pour chaque source d'énergie (16), les moyens de calcul (44) sont propres à fixer la valeur de consigne ($A_{ij}$ ou $F_{ij}$) égale à la valeur minimale de fonctionnement ($A_{min}$ ou $F_{min}$) lorsque la puissance électrique ($P_{ij}$) mesurée est égale à la puissance maximale ($Pn_j$).

## Patentansprüche

1. Verfahren zur Steuerung der elektrischen Leistung, die an ein elektrisches Netz durch mindestens zwei Quellen (16) elektrischer Energie geliefert wird, wobei jede Energiequelle (16) mit dem Netz (20) verbunden ist und eine Einrichtung (22) zur Speicherung elektrischer Energie umfasst, wobei das Verfahren für jede Energiequelle (16) die folgenden Schritte umfasst:

   - die Anwendung (104; 204) durch die Energiequelle (16) eines alternativen Spannungssignals ($S1_{ij}$) auf das elektrische Netz (20) für die Stromversorgung des Netzes, wobei ein Parameter des Spannungssignals ($S1_{ij}$) einen vorbestimmten Ausgangswert hat,
   - die Messung (106; 206), einer elektrischen Leistung ($P_{ij}$), die mit dem angewandten Spannungssignal ($S1_{ij}$) verbunden ist,
   - die Bestimmung (108; 208) einer elektrischen Energie ($ES_{ij}$), die in der Speichereinrichtung (22) gespeichert wird,
   - die Berechnung (112; 214) eines Sollwertes ($A_{ij}$ oder $F_{ij}$) des Parameters des Spannungssignals in Abhängigkeit von der gemessenen Leistung,
   - die Änderung (114; 216) des Spannungssignals, wobei der Wert des Parameters des Spannungssignals geändert wird, um gleich dem berechneten Sollwert ($A_{ij}$, $F_{ij}$) zu sein,
   **dadurch gekennzeichnet, dass** bei dem Berechnungsschritt (112, 214) der Sollwert ($A_{ij}$, $F_{ij}$) in Abhängigkeit unter anderem von der bestimmten gespeicherten elektrischen Energie ($ES_{ij}$) berechnet wird und eine abnehmende Funktion der elektrischen Leistung ($P_{ij}$) und eine ansteigende Funktion der gespeicherten elektrischen Energie ($ES_{ij}$) ist,
   dadurch, dass jede Energiequelle ausgelegt ist, um eine maximale Leistung ($Pn_j$) an das Netz (20) zu liefern, und damit der Parameter des Spannungssignals über einem Mindestbetriebswert ($A_{min}$ oder $F_{min}$) liegt, und dadurch, dass für jene Energiequelle (16) bei dem Berechnungsschritt (112; 214) der Sollwert ($A_{ij}$ oder $F_{ij}$) gleich dem Mindestbetriebswert ($A_{min}$ oder $F_{min}$) ist, wenn die gemessene elektrische Leistung ($P_{ij}$) gleich der maximalen Leistung ($Pn_j$) ist.

2. Verfahren nach Anspruch 1, in welchem der Parameter des Spannungssignals aus einer Amplitude des Spannungssignals und einer Frequenz des Spannungssignals gewählt wird, je nach Art des Netzes (20).

3. Verfahren nach Anspruch 1 oder 2, in welchem vor dem Berechnungsschritt (112; 214) das Verfahren für jede Energiequelle den folgenden Schritt umfasst:

   - die Einspeicherung (105; 205) einer maximalen elektrischen Energie ($ESM_{ij}$), die geeignet ist, durch die Speichereinrichtung (22) gespeichert zu werden,

   und in welchem bei dem Berechnungsschritt (112; 214) der Sollwert von einem ersten Verhältnis zwischen der gespeicherten elektrischen Energie ($ES_{ij}$) und der maximalen elektrischen Energie ($ESM_{ij}$) abhängt.

4. Verfahren nach Anspruch 3, in welchem bei dem Berechnungsschritt der Sollwert anhand einer ersten linearen Funktion bestimmt wird, wobei die erste lineare Funktion von der gemessenen elektrischen Leistung ($P_{ij}$) abhängt und einen negativen Gewichtungsfaktor hat.

5. Verfahren nach Anspruch 4, in welchem die erste lineare Gleichung nach der folgenden Gleichung aufgeht:

$$B_{ij} = B' - \left( K1_j - K2_j * \frac{ES_{ij}}{ESM_j} \right) * P_{ij},$$

in der i,j ganze Kennzahlen sind, die jeweils einem bestimmten Zeitpunkt und einem Identifikator der Energiequelle entsprechen,

B' ein gewünschter Wert für den Parameter des Spannungssignals ist, wenn die Energiequelle (16) mit dem Netz (20) verbunden ist und keine Ladung an das Netz angeschlossen ist, und

$P_{ij}$, $ES_{ij}$, $ESM_{ij}$, $B_{ij}$, $K1_j$ und $K2_j$ jeweils die Leistung, die gespeicherte elektrische Energie, die maximale elektrische Energie, der Sollwert, ein erster Koeffizient eines vorbestimmten Wertes und ein zweiter Koeffizient eines vorbestimmten Wertes sind.

6. Verfahren nach Anspruch 5, in welchem jede Energiequelle (16) ausgelegt ist, um eine maximale Leistung ($Pn_j$) an das Netz zu liefern, in welchem ein Produkt aus einerseits der Differenz zwischen dem ersten Koeffizienten ($K1_j$) und dem zweiten Koeffizienten ($K2_j$) und andererseits der maximalen Leistung ($Pn_j$) für jede der Energiequellen (16) identisch ist.

7. Verfahren nach Anspruch 4, in welchem bei dem Berechnungsschritt der Sollwert anhand einer stückweisen linearen stetigen Funktion berechnet wird, die gleich der ersten linearen Funktion für einen ersten Leistungsintervall und einer zweiten linearen Funktion für einen zweiten Leistungsintervall ist, wobei der zweite Intervall die maximale Leistung ($Pn_j$) umfasst und die untere Grenze des zweiten Intervalls höher oder gleich der oberen Grenze des ersten Intervalls ist.

8. Verfahren nach einem der Ansprüche 1 bis 3, in welchem jede Energiequelle ausgelegt ist, um eine maximale Leistung ($Pn_j$) an das Netz zu liefern, und damit der Parameter des Spannungssignals über einem Mindestbetriebswert $B_{min}$ liegt, und

in welchem bei dem Berechnungsschritt der Parameter des Spannungssignals anhand der folgenden Gleichung berechnet wird:

$$B_{ij} = B' - \left(\frac{(B' - B_{min})}{Pn_j}\right) * P_{ij} + dk * (C_{ij} - 0{,}5) * P_{ij}^{1+C_{ij}} * (Pn_j - P_{ij})^{2-C_{ij}},$$

mit $C_{ij} = \dfrac{ES_{ij}}{ESM_j}$

in der i, j ganze Kennzahlen sind, die jeweils einem bestimmten Zeitpunkt und einem Identifikator der Energiequelle entsprechen,

B' ein gewünschter Wert für den Parameter des Spannungssignals ist, wenn die Energiequelle mit dem Netz verbunden ist und keine Ladung an das Netz angeschlossen ist,

dk ein Parameter eines vorbestimmten Wertes ist, und

$P_{ij}$, $ES_{ij}$, $ESM_{ij}$, $B_{ij}$, jeweils die Leistung, die gespeicherte elektrische Energie, die maximale elektrische Energie und der Sollwert sind.

9. Elektrisches System (12), bestehend aus mindestens zwei Quellen elektrischer Energie (16), wobei jede Energiequelle (16) mit dem elektrischen Netz (20) verbunden ist, und bestehend aus einer Einrichtung (22) zur Speicherung von elektrischer Energie und einem Modul (24) zur Steuerung der Speichereinrichtung, wobei jedes Steuerungsmodul (24) umfasst:

- eine Einheit (30) zur Anwendung eines alternativen Spannungssignals ($S1_{ij}$) auf das elektrische Netz (20) für die Stromversorgung des Netzes, wobei ein Parameter des Spannungssignals einen vorbestimmten Ausgangswert hat,

- Mittel (36) zum Messen einer elektrischen Leistung ($P_{ij}$), die mit dem angewandten Spannungssignal ($S1_{ij}$) verbunden ist,

- Mittel (38) zur Bestimmung einer elektrischen Energie ($ES_{ij}$), die in der Speichereinrichtung (22) gespeichert wird,

- Mittel (44) zur Berechnung eines Sollwertes ($A_{ij}$, $F_{ij}$) des Parameters des Spannungssignals in Abhängigkeit von der gemessenen Leistung, und

- Mittel (46) zur Änderung des Spannungssignals ($S1_{ij}$), die geeignet sind, den Wert des Parameters des Spannungssignals zu ändern und damit der Wert des Parameters des Spannungssignals gleich dem berechneten Sollwert ist ($A_{ij}$, $F_{ij}$), **dadurch gekennzeichnet, dass** die Mittel zur Berechnung (44) geeignet sind, den Sollwert

(A$_{ij}$, F$_{ij}$) in Abhängigkeit unter anderem von der bestimmten gespeicherten elektrischen Energie (ES$_{ij}$) zu berechnen, wobei der Sollwert (A$_{ij}$, F$_{ij}$) eine abnehmende Funktion der elektrischen Leistung (P$_{ij}$) und eine ansteigende Funktion der gespeicherten elektrischen Energie (ES$_{ij}$) ist,
dadurch, dass jede Energiequelle ausgelegt ist, um eine maximale Leistung (Pn$_j$) an das Netz (20) zu liefern, und damit der Parameter des Spannungssignals über einem Mindestbetriebswert (A$_{min}$ oder F$_{min}$) liegt, und dadurch, dass für jede Energiequelle (16) die Mittel zur Berechnung (44) geeignet sind, den Sollwert (A$_{ij}$ oder F$_{ij}$) gleich dem Mindestbetriebswert (A$_{min}$ oder F$_{min}$) festzulegen, wenn die gemessene elektrische Leistung (P$_{ij}$) gleich der maximalen Leistung (Pn$_j$) ist.

**Claims**

1. A control method for controlling the electrical power delivered over an electrical network by at least two electrical energy sources (16), each electrical energy source (16) being connected to the network (20) and comprising a storage member (22) for storing electrical energy, the method including for each energy source (16) the following steps:

   - the application (104; 204) by the electrical energy source (16) of an alternating voltage signal (S1$_{ij}$) over the electrical supply network (20) for the supplying of electrical power to the network, a parameter of the voltage signal having a predetermined initial value;
   - the measurement (106 ; 206) of an electrical power (P$_{ij}$) associated with the voltage signal (S1$_{ij}$) applied ;
   - the determination (108 ; 208) of an electrical energy (ES$_{ij}$) stored in the storage member (22) ;
   - the calculation (112 ; 214) of a set point value (A$_{ij}$ or F$_{ij}$) for the parameter of the voltage signal as a function of the measured power;
   - the modification (114 ; 216) of the voltage signal, the value of the parameter of the voltage signal being modified so as to be equal to the calculated set point value (A$_{ij}$, F$_{ij}$) ;

   **characterised in that** during the calculation step (112 ; 214), the set point value (A$_{ij}$, F$_{ij}$) is calculated as a function, in addition, of the stored electrical energy (ES$_{ij}$) determined and is a decreasing function of the electrical power (P$_{ij}$) and an increasing function of the stored electrical energy (ES$_{ij}$),
   **in that** each energy source is adapted for delivering a maximal power (Pn$_j$) to the network (20) and for that the parameter of the voltage signal be greater than a minimal operating value (A$_{min}$ or F$_{min}$), and
   and **in that**, for each electrical energy source (16), during the calculation step (112 ; 214), the set point value (A$_{ij}$ or F$_{ij}$) is equal to the minimal operating value (A$_{min}$ or F$_{min}$) when the measured electrical power (P$_{ij}$) is equal to the maximal power (Pn$_j$)

2. A method according to claim 1, wherein the parameter of the voltage signal is selected from an amplitude of the voltage signal and a frequency of the voltage signal, depending on the type of network (20).

3. A method according to claim 1 or 2, wherein, prior to the calculation step (112 ; 214), the method includes, for each energy source, a step of:

   - recording (105 ; 205) of a maximal electrical energy (ESM$_{ij}$) that is able to be stored by the storage member (22);

   and wherein, during the calculation step (112 ; 214), the set point value is a function of a first ratio between the stored electrical energy (ES$_{ij}$) and the maximum electrical energy (ESM$_{ij}$).

4. A method according to claim 3, wherein, during the calculation step, the set point value is determined based on a first affine function, the first affine function being dependent on the measured electrical power (P$_{ij}$) and having a negative slope.

5. A method according to claim 4, wherein the first affine equation satisfies the following equation:

$$B_{ij} = B' - (K1_j - K2_j * \frac{ES_{ij}}{ESM_j}) * P_{ij} \, ,$$

   where i, j are integer indices corresponding respectively to a given time instant and to an identifier of the electrical energy source;

B' is a desired value for the parameter of the voltage signal when the electrical energy source (16) is connected to the network (20) and no load is connected to the network, and

$P_{ij}$, $ES_{ij}$, $ESM_j$, $B_{ij}$, $K1_j$, and $K2_j$ are respectively the power, the stored electrical energy, the maximal electrical energy, the set point value, a first coefficient of predetermined value and a second coefficient of predetermined value.

6. A method according to claim 5, wherein each energy source (16) is capable of delivering a maximal power ($Pn_j$) to the network, wherein a product between, on the one hand, the difference between the first coefficient ($K1_j$) and the second coefficient ($K2_j$) and, on the other hand, the maximal power ($Pn_j$) is identical for each of the energy sources (16).

7. A method according to claims 4, wherein, during the calculation step, the set point value is calculated based on a continuous piecewise linear function which is equal to the first affine function for a first power interval and to a second affine function for a second power interval, the second interval comprising the maximal power ($Pn_j$), and the lower bound of the second interval being greater than or equal to the upper bound of the first interval.

8. A method according to any one of claims 1 to 3, wherein each energy source is adapted for delivering a maximal power $Pn_j$ to the network and for that the parameter of the voltage signal be greater than a minimal operating value $B_{min}$, and

wherein, during the calculation step, the parameter of the voltage signal is calculated on the basis of the following equation:

$$B_{ij} = B' - (\frac{(B' - B_{min})}{Pn_j}) * P_{ij} + dk * (C_{ij} - 0.5) * P_{ij}^{1+C_{ij}} * (Pn_j - P_{ij})^{2-C_{ij}} ;$$

with $C_{ij} = \dfrac{ES_{ij}}{ESM_j}$

where i, j are integer indices corresponding respectively to a given time instant and to an identifier of the electrical energy source;

B' is a desired value for the parameter of the voltage signal when the electrical energy source is connected to the network and no load is connected to the network;

dk is a parameter of predetermined value; and

$P_{ij}$, $ES_{ij}$, $ESM_j$, $B_{ij}$, are respectively the power, the stored electrical energy, the maximal electrical energy, and the set point value.

9. An electrical system (12) comprising at least two electrical energy sources, (16) each electrical energy source (16) being connected to the electrical network (20) and comprising a storage member (22) for storing electrical energy, and a control module (24) for controlling the storage member, each control module (24) comprising:

- a signal application unit (30) for applying an alternating voltage signal ($S1_{ij}$) over the electrical network (20) for the supply of electrical power to the network, with a parameter of the voltage signal having a predetermined initial value;
- measurement means (36) for measuring an electrical power ($P_{ij}$) associated with the voltage signal ($S1_{ij}$) applied;
- determination means (38) for determining an electrical energy ($ES_{ij}$) stored in the storage member (22);
- calculation means (44) for calculating a set point value ($A_{ij}$, $F_{ij}$) of the voltage signal parameter as a function of the measured power; and
- signal modification means (46) for modifying the voltage signal ($S1_{ij}$) which are capable of modifying the value of the parameter of the voltage signal for that the value of the voltage signal parameter be equal to the calculated set point value ($A_{ij}$, $F_{ij}$),

**characterised in that** the calculation means (44) are capable of calculating the set point value ($A_{ij}$, $F_{ij}$) as a function, in addition, of the stored electrical energy ($ES_{ij}$) determined, the set point value ($A_{ij}$, $F_{ij}$) being a decreasing function of the electrical power ($P_{ij}$) and an increasing function of the stored electrical energy ($ES_{ij}$),
**in that** each energy source is adapted for delivering a maximal power ($Pn_j$) to the network (20) and for that the parameter of the voltage signal be greater than a minimal operating value ($A_{min}$ or $F_{min}$), and
and **in that**, for each electrical energy source (16), the calculation means (44) are adapted for setting the set point value ($A_{ij}$ or $F_{ij}$) equal to the minimal operating value ($A_{min}$ or $F_{min}$) when the measured electrical power ($P_{ij}$) is equal to the maximal power ($Pn_j$)

FIG.1

FIG.2

A(V)

A'

50

60

$A_{min}$

$P_n$

P(W)

| | |
|---|---|
| acquisition de la première fonction affine | 100 |
| démarrage | 102 |
| commande de l'application du signal $S1_{ij}$ | 104 |
| mémorisation de l'énergie maximale $ESM_j$ | 105 |
| mesure de la puissance $P_{ij}$ | 106 |
| évaluation de l'énergie stockée $ES_{ij}$ | 108 |
| calcul de la valeur de consigne $A_{ij}$ | 112 |
| modification du signal $S1_{ij}$ | 114 |

FIG.3

FIG.4

FIG.5

FIG.7

```
┌─────────────────────┐
│   acquisition des    │
│      fonctions       │⌇── 200
└─────────────────────┘
          ↓
┌─────────────────────┐
│      démarrage       │⌇── 202
└─────────────────────┘
          ↓
┌─────────────────────┐
│    commande de       │
│ l'application de S1ij│⌇── 204
└─────────────────────┘
          ↓
┌─────────────────────┐
│ mémorisation de ESMj │⌇── 205
└─────────────────────┘
          ↓
┌─────────────────────┐
│    mesure de Pij     │⌇── 206
└─────────────────────┘
          ↓
┌─────────────────────┐
│   évaluation de ESij │⌇── 208
└─────────────────────┘
          ↓
┌─────────────────────┐
│   sélection de l'une │
│     des fonctions    │⌇── 212
└─────────────────────┘
          ↓
┌─────────────────────┐
│     calcul de Aij    │⌇── 214
└─────────────────────┘
          ↓
┌─────────────────────┐
│  modification de S1ij│⌇── 216
└─────────────────────┘
```

## FIG.6

FIG.8

FIG.9

FIG.10

**RÉFÉRENCES CITÉES DANS LA DESCRIPTION**

**Littérature non-brevet citée dans la description**

- **JOSEP M. GUERRERO, L. H.** Control of Distributed Uninterruptible Power Supply Systems. *Transactions on industrial electronics,* Août 2008